# EUROPEAN PATENT SPECIFICATION

(11) **EP 3 782 885 B1**
(45) Date of publication and mention of the grant of the patent: **23.03.2022**
(21) Application number: 20191644.2
(22) Date of filing: 19.08.2020
(51) Int. Cl.: B62J 6/026, B62J 17/02, B60Q 1/04, B60Q 1/00

(54) **STRADDLED VEHICLE**
GRÄTSCHSITZFAHRZEUG
VÉHICULE À ENFOURCHER

(30) Priority: 21.08.2019 JP 2019150946
(43) Date of publication of application: 24.02.2021
(73) Proprietor: Yamaha Hatsudoki Kabushiki Kaisha, Iwata-shi Shizuoka 438-8501 (JP)
(72) Inventor: CHEN, Yen-Fu, 320 Taiwan (TW); TSAI, Cheng-Ting, 320 Taiwan (TW); CHIEN, I-Lun, 320 Taiwan (TW)
(74) Representative: Grünecker Patent- und Rechtsanwälte PartG mbB

(56) References cited:
- JP-A- H08 310 465
- JP-A- 2018 052 416
- TW-B- I 510 385

## Description

The present invention relates to a straddled vehicle and in particular relates to a headlight unit of a straddled vehicle.

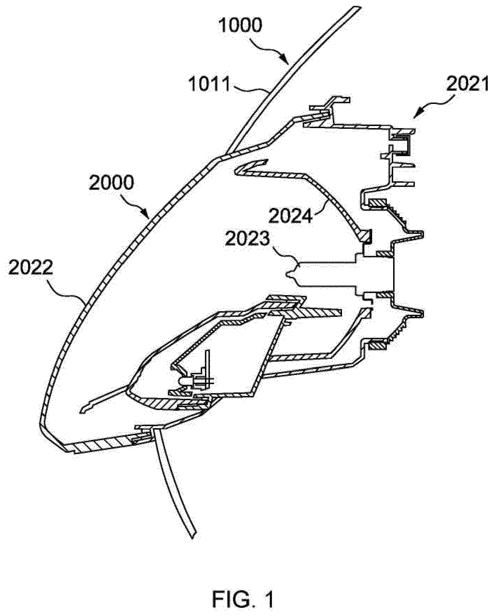

JP H08 310465 A discloses a straddled vehicle according to the preamble of claim 1. Patent Document TW 1510385 discloses a scooter type vehicle that is one type of straddled vehicle. As illustrated in FIG. 1, the scooter type vehicle includes a head pipe (not illustrated), a front portion cover 1000 arranged in front of the head pipe, and a headlight unit 2000 arranged in the front portion cover 1000. The front portion cover 1000 includes a front cover portion 1011 that is arranged above the headlight unit 2000.

As seen in a cross-section, the headlight unit 2000 includes: a housing portion 2021, the front surface portion of which is open; a transparent cover portion 2022 that is provided on the front surface of the housing portion 2021 and that protrudes further to the front than the front cover portion 1011; and a bulb 2023 and a reflector portion 2024 which are accommodated inside a space formed by the housing portion 2021 and the transparent cover portion 2022.

The front cover portion 1011 covers an upper end of the transparent cover portion 2022 at a position above the reflector portion 2024. In addition, the transparent cover portion 2022 is formed so as to protrude further to the front than the front cover portion 1011 and be exposed.

The front cover portion 1011 disclosed in Patent Document TW 1510385 covers the upper end of the transparent cover portion 2022 at a position above the reflector portion 2024, and the transparent cover portion 2022 of the headlight unit 2000 is formed so as to protrude further to the front than the front cover portion 1011 and be exposed.

In this case, sunlight enters the space formed by the housing portion 2021 and the transparent cover portion 2022 from the transparent cover portion 2022 that is not shielded by the front cover portion 1011.

As a result, there is a need to design a heat space in consideration of the thermal energy acquired from the sunlight in addition to the thermal energy produced by the bulb 2023 itself when the headlight unit 2000 is turned on.

Therefore, there is a tendency to increase the size of the headlight unit 2000 to ensure a sufficient volume for the heat space.

However, the heat space is larger than necessary on days when only a small amount of thermal energy is acquired from the sunlight such as on cloudy or rainy days.

As a result, the temperature inside the headlight unit 2000 tends not to rise and rainwater clinging to the outer surface of the transparent cover portion 2022 is not easily evaporated.

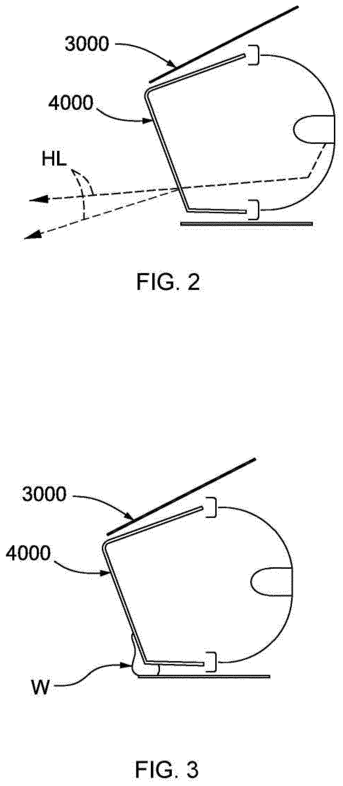

As illustrated in FIG. 2, it has been considered arranging the font edge portion of a front cover portion 3000 further downward and forward than an upper edge portion of the reflector portion, and extending a transparent cover portion 4000 of the headlight unit rearward and downward of the vehicle from the front edge portion of the front cover portion 3000, thereby suppressing an increase in size in order to resolve the aforementioned problem.

By arranging the front edge portion of the front cover portion 3000 further downward and forward than the upper edge portion of the reflector portion, the amount of shielding by the front cover portion 3000 is increased. Moreover, by extending the light-emitting surface of the transparent cover portion 4000 of the headlight unit rearward and downward of the vehicle from the front edge portion of the front cover portion 3000, the amount of the transparent cover portion 4000 that is not overlapped by the front cover portion 3000 as seen in the vehicle plan view is reduced, whereby the amount of sunlight entering the inside of the headlight unit can be reduced, the thermal energy acquired from sunlight is less, and the volume of the heat space can be reduced. Additionally, rainwater is less likely to become attached to the transparent cover portion 4000 and less rainwater clings to the transparent cover portion 4000 in comparison to a conventional headlight unit. Furthermore, the amount of exposure of the transparent cover portion 4000 is reduced as seen in the vehicle plan view, and therefore fluctuation of the amount of thermal energy acquired from sunlight between sunny days and cloudy days is reduced and the heat space volume required for sunny days can be reduced. Consequently, an increase in the size of the headlight unit can be suppressed.

However, when the light-emitting surface of the transparent cover portion 4000 extends rearward and downward of the vehicle from the front edge portion of the front cover portion 3000 to become an inverse inclined surface, high beam light HL is affected and a new problem arises.

That is, the high beam light HL is necessarily irradiated further in the forward direction in comparison to the low beam light and a portion of the high beam light is reflected by the reflector below the bulb and irradiated in the forward direction of the vehicle.

As a result, as illustrated in FIG. 2, the light-emitting surface of the transparent cover portion 4000 becomes an inverse inclined surface and the incident angle of the high beam light HL tends to deviate from 0-degrees with respect to the transparent cover portion 4000 (that is, vertical incidence tends to be lost). As a result, there is a concern that an effect will occur in which the high beam light HL is refracted by the inverse inclined surface of the transparent cover portion 4000 and the amount of high beam light irradiated toward the intended location is reduced.

Furthermore, as illustrated in FIG. 3, although the rainwater falling from the sky is less likely to cling to the transparent cover portion 4000, rainwater W splashed upward by the vehicle is more likely to cling to the transparent cover portion 4000 due to the light-emitting surface of the transparent cover portion 4000 being an inverse inclined surface.

In this case, because the light-emitting surface of the transparent cover portion 4000 is an inverse inclined surface, the traveling wind flows along the inverse inclined surface whereby the rainwater W clinging to the transparent cover portion 4000 tends to pool at the bottom of the transparent cover portion 4000. Accordingly, the high beam light HL is more likely to be diffused when passing through the transparent cover portion 4000 due to the rainwater W pooled at the bottom of the transparent cover portion 4000, and therefore, there is a concern that the amount of light of the high beam irradiated toward the intended location is reduced.

In consideration of the above situation, an object of the present invention is to provide a straddled vehicle provided with a headlight unit with which rainwater clinging to the transparent cover portion can be easily removed while suppressing an increase in the size of the headlight unit.

According to the present invention said object is solved by a straddled vehicle having the features of independent claim 1. Preferred embodiments are laid down in the dependent claims.

Accordingly, it is provided a straddled vehicle that includes a head pipe, a front portion cover arranged in front of the head pipe, and a headlight unit arranged in the front portion cover. The front portion cover includes a front cover portion that is arranged above the headlight unit. The headlight unit includes a bulb for emitting light, a reflector portion for reflecting the light from the bulb, a housing portion that accommodates the bulb and the reflector portion, a transparent cover portion that covers the bulb and the reflector portion from the front, and a lamp chamber formed by the housing portion and the transparent cover portion. As seen in a cross-section at the center in the vehicle left-right direction, the front cover portion extends obliquely downward toward the front of the vehicle at least from above an upper end of the transparent cover portion, and a front edge portion of the front cover portion is arranged further downward and forward than an upper edge portion of the reflector portion. The transparent cover portion includes a light-emitting surface that is exposed to the outside and irradiates the light from the bulb in the forward direction of the vehicle, and the light-emitting surface includes, as seen in a cross-section at the center in the vehicle left-right direction, a light-emitting surface upper portion that extends rearward and downward of the vehicle from the front edge portion of the front cover portion, and a light-emitting surface lower portion that extends forward and downward of the vehicle from the light-emitting surface upper portion. A boundary of the light-emitting surface upper portion and the light-emitting surface lower portion is positioned below an upper end of the bulb and above a lower end of the bulb as seen in the cross-section at the center in the vehicle left-right direction. As seen in the cross-section at the center in the vehicle left-right direction, the reflector portion includes, at least, a reflector upper portion that is positioned above the bulb, extends rearward and downward of the vehicle, and reflects the light from the bulb in the forward direction of the vehicle, and a reflector lower portion that is positioned below the bulb, extends forward and downward of the vehicle, and reflects the light from the bulb in the forward direction of the vehicle.

According to the above mode, the front edge portion of the front cover portion of the straddled vehicle of the present teaching is arranged further downward and forward than the upper edge portion of the reflector portion, and the light-emitting surface upper portion extends rearward and downward of the vehicle from the front edge portion of the front cover portion, whereby it is difficult for sunlight to enter the lamp chamber from the transparent cover portion which is not shielded by the front cover portion. As a result, changes in temperature inside the lamp chamber (heat space) between sunny days and cloudy days are reduced and therefore the lamp chamber can be made smaller.

In addition, as seen in the cross-section at the center in the vehicle left-right direction, the light-emitting surface upper portion is configured to extend rearward and downward of the vehicle from the front edge portion of the front cover portion to form an inverse inclined surface, whereby the portion exposed upward is reduced and it is difficult for rainwater falling from the sky to cling to the light-emitting surface.

In addition, as seen in the cross-section at the center in the vehicle left-right direction, the light-emitting surface lower portion is configured to extend forward and downward of the vehicle from the light-emitting surface upper portion to form a forward inclined surface, and the reflector lower portion extends forward and downward of the vehicle, whereby the incident angle of the high beam light with respect to the light-emitting surface lower portion can be easily configured to approach 0-degrees (namely, vertical incidence). As a result, the amount of light refracted downward by the transparent cover portion can be reduced and the amount of high beam light irradiated toward the intended location can be assured.

In addition, as seen in the cross-section at the center in the vehicle left-right direction, the light-emitting surface lower portion is configured to extend forward and downward of the vehicle from the light-emitting surface upper portion to form a forward inclined surface, whereby the situation of rainwater, which is splashed upward by the vehicle when traveling, clinging to the light-emitting surface can be prevented. While there is a concern that the problem of rainwater falling from the sky clinging to the light-emitting surface may occur again due to the light-emitting surface lower portion extending forward and downward of the vehicle, the traveling wind flows along the shape of the light-emitting surface lower portion, whereby the rainwater clinging to the light-emitting surface lower portion moves easily to the boundary of the light-emitting surface upper portion and the light-emitting surface lower portion. The boundary of the light-emitting surface upper portion and the light-emitting surface lower portion is positioned near the bulb and therefore rainwater pooled at the boundary is evaporated easily by heat from the bulb. Therefore, rainwater clinging to the light-emitting surface lower portion can be removed easily.

The reflector upper portion in the straddled vehicle of the present teaching preferably includes an upper effective portion that is inclined in the same direction as the light-emitting surface upper portion as seen in the cross-section at the center in the vehicle left-right direction, and the reflector lower portion preferably includes a lower effective portion that is inclined in the same direction as the light-emitting surface lower portion as seen in the cross-section at the center in the vehicle left-right direction.

In this case, the amount of low beam light and high beam light irradiated toward the intended location can be more effectively assured due to the upper effective portion and the lower effective portion in the straddled vehicle of the present teaching.

The bulb of the straddled vehicle of the present teaching preferably includes an illumination portion and a socket portion to which the illumination portion is attached, and the boundary of the light-emitting surface upper portion and the light-emitting surface lower portion is preferably positioned between the upper end and the lower end of the illumination portion as seen in the cross-section at the center in the vehicle left-right direction.

In this case, changes in the temperature between sunny days and cloudy days in the lamp chamber (heat space) of the straddled vehicle of the present teaching are reduced, the heat space volume required for sunny days is reduced, and a heat space that is sufficient even for sunny days can be assured. The boundary is positioned near the center of the bulb and heat from the center of the bulb is transmitted easily to the boundary, whereby rainwater pooled at the boundary is easily evaporated by the heat from the center of the bulb.

A front end of the light-emitting surface lower portion in the straddled vehicle of the present teaching is preferably positioned further to the front of the vehicle than a front end of the light-emitting surface upper portion as seen in the cross-section at the center in the vehicle left-right direction.

In this case, the straddled vehicle of the present teaching is configured such that the light-emitting surface lower portion is a forward inclined surface that extends forward and downward of the vehicle from the light-emitting upper surface and the front end of the light-emitting surface lower portion is positioned further to the front of the vehicle than the front end of the light-emitting surface upper portion, whereby the rainwater splashed upward by the vehicle during traveling can be can be blocked and clinging of the rainwater splashed upward by the vehicle when traveling can be prevented more effectively.

In addition, because the light-emitting surface lower portion is a forward inclined surface, the traveling wind is easily guided along the surface and rainwater clinging to the light-emitting surface lower portion can be moved easily to the boundary of the light-emitting surface upper portion and the light-emitting surface lower portion by the traveling wind. Rainwater that has pooled on the boundary is easily evaporated by the heat from the center of the bulb.

The front portion cover of the straddled vehicle of the present teaching preferably includes a lower cover portion that is arranged below the headlight unit and extends downward from the lower edge of the headlight unit.

In this case, rainwater splashed upward by the vehicle when traveling can be blocked by the lower cover portion of the straddled vehicle of the present teaching and the clinging of the rainwater to the transparent cover portion can be prevented more effectively.

The lower cover portion of the straddled vehicle of the present teaching preferably extends forward and downward of the vehicle.

In this case, rainwater splashed upward by the vehicle when traveling can be blocked by the lower cover portion that extends forward and downward of the vehicle in the straddled vehicle of the present teaching, and the clinging of the rainwater to the transparent cover portion can be prevented more effectively. Furthermore, the lower cover portion extends forward and downward of the vehicle whereby the traveling wind is guided easily and is able to flow toward the light-emitting surface lower portion. Rainwater clinging to the light-emitting surface lower portion can be moved easily to the boundary of the light-emitting surface upper portion and the light-emitting surface lower portion by the traveling wind. Rainwater that has pooled on the boundary is easily evaporated by the heat from the center of the bulb.

As seen in the cross-section at the center in the vehicle left-right direction, the position corresponding to the bulb within the transparent cover portion is preferably positioned further to the rear of the vehicle than an imaginary line that connects the front end of the light-emitting surface upper portion and the front end of the light-emitting surface lower portion in the straddled vehicle of the present teaching.

In this case, the lamp chamber (heat space) of the straddled vehicle of the present teaching is configured so that a change in the temperature between sunny days and cloudy days is reduced, the required volume of the heat space for sunny days is reduced, and a heat space that is sufficient even for sunny days can be assured. The position corresponding to the bulb within the transparent cover portion is near the center of the bulb and heat from the center of the bulb is easily transmitted to the position corresponding to the bulb in the transparent cover portion, whereby rainwater pooled at the position corresponding to the bulb in the transparent cover portion is easily evaporated by the heat from the center of the bulb.

The boundary of the light-emitting surface upper portion and the light-emitting surface lower portion in the straddled vehicle of the present teaching preferably extends to the left and right sides and upward from the center in the vehicle left-right direction as seen in the vehicle front view, and preferably extends upward and rearward from the front of the vehicle as seen in the vehicle side view.

In this case, the traveling wind flows along the shape of the boundary in the straddled vehicle of the present teaching, whereby rainwater is moved easily outward in the left and right sides of the transparent cover portion and rearward and therefore does not easily cling to the transparent cover portion.

According to this configuration, rainwater that has pooled on the boundary is easily evaporated by the heat from the center of the bulb.

### Brief Description of Drawings

FIG. 1 is a side view of a headlight unit 2000 of a straddled vehicle according to Patent Document TW 1510385.
FIG. 2 is a schematic view for explaining the high beam light when the transparent cover portion of a headlight unit is an inverse inclined surface.
FIG. 3 is a schematic view for explaining how rainwater pools easily on the transparent cover portion when the transparent cover portion of a headlight unit is an inverse inclined surface.
FIG. 4 is a left side view of a straddled vehicle 1 according to the present teaching.
FIG. 5 is a localized enlarged front view illustrating a portion of a structure of a vehicle front portion of the straddled vehicle 1 according to the present teaching.
FIG. 6 is a localized enlarged cross-sectional view illustrating a portion of a structure of the vehicle front portion of the straddled vehicle 1 according to the present teaching.
FIG. 7 is a localized enlarged front view illustrating the front portion cover and a headlight unit of the straddled vehicle 1 according to the present teaching.
FIG. 8 illustrates the front portion cover and the headlight unit as seen from in front and to the left of the vehicle.
FIG. 9 is a localized enlarged cross-sectional view for explaining the arrangement relationship among the members of the headlight unit.

### Description of Embodiments

Hereinbelow, a straddled vehicle 1 according to the present teaching will be explained in detail with reference to an embodiment depicted in the accompanying drawings.

In the following explanation, the directions forward, rearward, leftward, rightward, upward, and downward respectively have the same meaning as toward the front of the vehicle, toward the rear of the vehicle, toward the left in the vehicle left-right direction, toward the right in the vehicle left-right direction, upward in the vehicle up-down direction, and downward in the vehicle up-down direction as seen from a rider sitting on the straddled vehicle 1. That is, the above directions mean toward the front of the vehicle, toward the rear of the vehicle with regards to the vehicle front-rear direction, toward the left of the vehicle, toward the right of the vehicle with regards to the vehicle left-right direction, the vehicle upward direction, and the vehicle downward direction with regards to the vehicle up-down direction as seen from the rear of the vehicle.

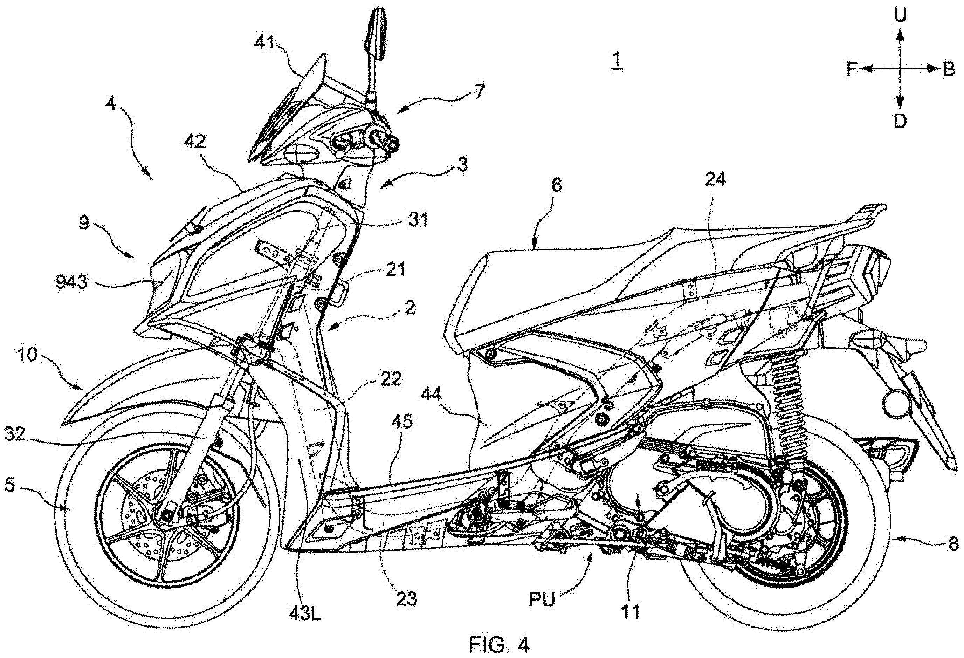

The letter markers "F," "B," "L," "R," "U," and "D" in the following FIG. 4-7 and 9 respectively indicate "toward the front of the vehicle," "toward the rear of the vehicle," "toward the left of the vehicle," "toward the right of the vehicle," the "vehicle upward direction," and the "vehicle downward direction."

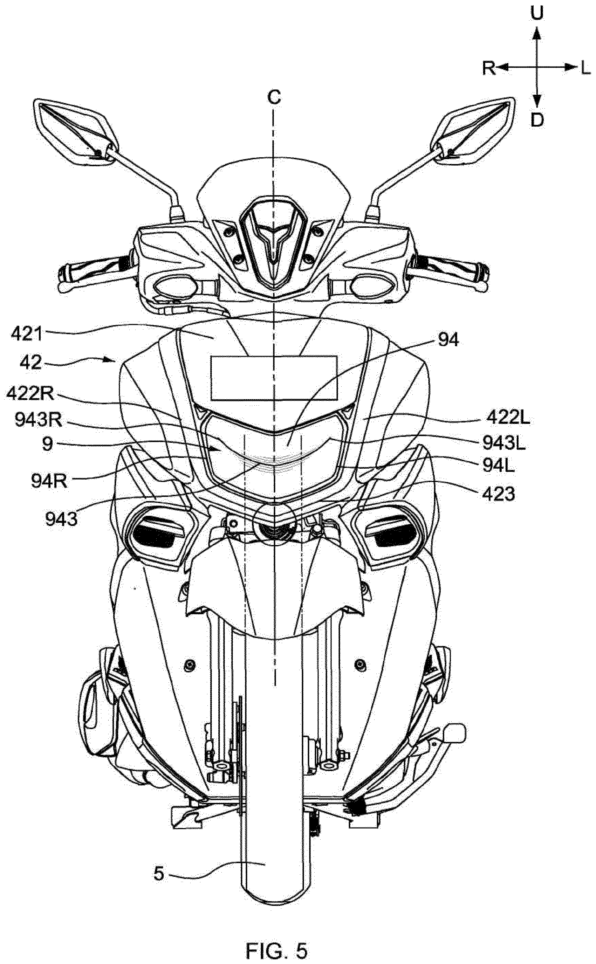

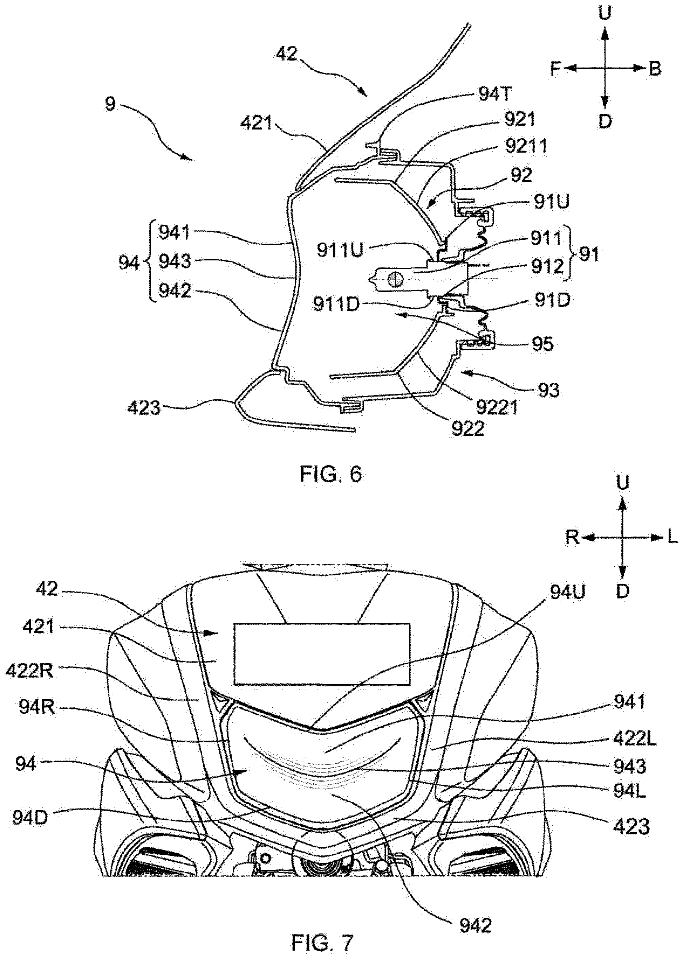

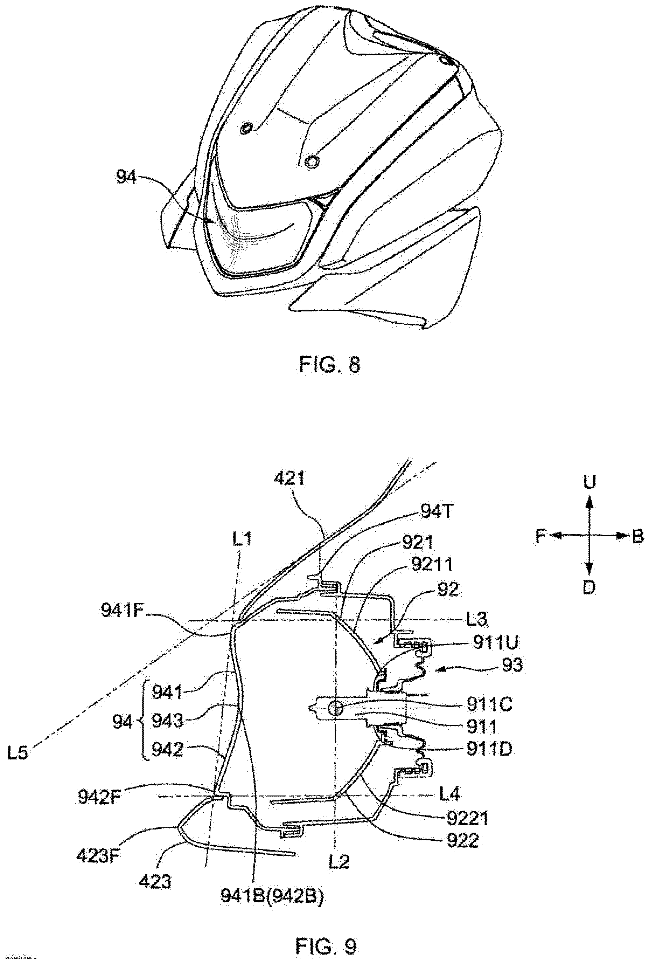

FIG. 4 is a left side view of the straddled vehicle 1 according to the present teaching. FIG. 5 is a localized enlarged front view illustrating a portion of a structure of a vehicle front portion of the straddled vehicle 1 according to the present teaching. FIG. 6 is a localized enlarged cross-sectional view illustrating a portion of a structure of the vehicle front portion of the straddled vehicle 1 according to the present teaching. FIG. 7 is a localized enlarged front view illustrating the front portion cover and a headlight unit of the straddled vehicle 1 according to the present teaching. FIG. 8 illustrates the front portion cover and the headlight unit as seen from in front and to the left of the vehicle. FIG. 9 is a localized enlarged cross-sectional view for explaining the arrangement relationship among the members of the headlight unit.

### <Overall vehicle>

An overall structure of the straddled vehicle 1 of the present embodiment will be explained first with reference to FIG. 4. The straddled vehicle 1 is a so-called "under-bone" type straddled vehicle. The straddled vehicle 1 includes a vehicle body frame 2, a steering mechanism 3, a vehicle body cover 4, a front wheel 5, a seat 6, a handle 7, a rear wheel 8, and a headlight unit 9. The internal structure of the vehicle body frame 2 and portions of the vehicle hidden by the vehicle body cover 4 are depicted with dotted lines.

### <Vehicle body frame 2>

The vehicle body frame 2 includes the head pipe 21, a down frame portion 22, a lower frame portion 23, and a rear frame portion 24.

The head pipe 21 is inserted into and rotatably supported by a steering shaft 31 of the steering mechanism 3 and extends diagonally downward toward the front of the vehicle. The down frame portion 22 is connected to the head pipe 21 by welding or the like and extends diagonally downward toward the rear of the vehicle and is positioned further to the rear than the front wheel 5. The lower frame portion 23 is connected to a lower portion of the down frame portion 22 and extends rearward of the vehicle. The rear frame portion 24 is connected to a rear portion of the lower frame portion 23 and extends rearward and upward, and supports the seat 6 from below.

A unit swing type power unit PU is supported by the rear frame portion 24 of the vehicle body frame 2 in a manner that allows vertical swinging. The seat 6 is arranged above the power unit PU. A rider operates the steering mechanism 3 and drives the straddled vehicle 1 while sitting on a sitting portion of the seat 6 and placing his/her feet on the upper surface of a footboard portion.

The power unit PU is provided with, for example, an engine (not illustrated), and a V-belt type continuously variable transmission arranged inside a transmission case 11 that extends toward the rear of the vehicle from the outside of the engine in the vehicle width direction, and the power unit PU is a structure in which the engine and the transmission case 11 are provided in an integrated manner. The engine is mounted such that the cylinder shaft is oriented substantially horizontally toward the front. The engine is an air-cooled single cylinder 4-cycle engine. However, the type of engine is not limited in particular. The engine may be water-cooled type or may be a multi-cylinder engine. The rear wheel 8 driven by driving power from the engine is rotatably supported at a rear end portion of the transmission case 11. The engine and the transmission case 11 may not be integrated and may be provided as separate structures. As illustrated in FIG. 4, the transmission case 11 is provided on the vehicle left side. However, the transmission case 11 may be provided on the vehicle right side.

### <Steering mechanism 3>

The handle 7 which is operated by the rider is provided to an upper portion of the steering mechanism 3. Front forks 32 are provided to a lower portion of the steering mechanism 3. The front wheel 5 is installed at the lower ends of the front forks 32 and is rotatably supported by a lower portion of the steering mechanism 3. The front wheel 5 can be turned, by the rider operating the handle 7, so as to be deflected to the right and left with respect to a center line C (see FIG. 5) that extends in the front-back direction along the center in the vehicle width direction. The front forks 32 each have a suspension mechanism and absorb shocks due to the extension and contraction of the suspension mechanisms. The front wheel 5 moves in the up-down direction with respect to the handle 7 accompanying the extension and contraction of the suspension mechanisms of the front forks 32. A front fender 10 is arranged above the front wheel 5. The front fender 10 covers the upper side of the front wheel 5.

### <Vehicle body cover 4>

As illustrated in FIG. 4, the vehicle body cover 4 includes a handle cover 41, a front portion cover 42, side covers 43L, 43R, a rear cover 44, and a footboard 45.

### [Handle cover 41]

The handle cover 41 is arranged above the front portion cover 42 and is formed so as to surround the handle 7.

### [Front portion cover 42]

The front portion cover 42 is arranged in front of the head pipe 21 and above the front wheel 5 as illustrated in FIG. 4. In addition, the front portion cover 42 has provided therein an opening for arranging the headlight unit 9 in the front portion cover 42. As illustrated in FIG. 5, the front portion cover 42 includes a front cover portion 421 that is arranged above the headlight unit 9, side cover portions 422L, 422R that are arranged to the right and left of the headlight unit 9, and a lower cover portion 423 that is arranged below the headlight unit 9, as seen in the vehicle front view. The front cover portion 421, the side cover portions 422L, 422R, and the lower cover portion 423 are formed integrally, and the opening is formed. The opening is formed so as to surround the headlight unit 9 as seen in the vehicle front view. However, the front cover portion 421, the side cover portions 422L, 422R, and the lower cover portion 423 may be formed separately. In addition, if the headlight unit 9 can be arranged in the front portion cover 42, the lower cover portion 423 may not be provided. A cutout may be formed by the front cover portion 421 and the side cover portions 422L, 422R, and the headlight unit 9 may be arranged in the cutout.

When the lower cover portion 423 is arranged below the headlight unit 9, as illustrated in FIG. 6, the lower cover portion 423 extends downward of the vehicle from a lower edge of a light-emitting surface of a transparent cover portion 94 of the below-mentioned headlight unit 9. In addition, the lower cover portion 423 may extend forward and downward of the vehicle. Specifically, because the lower cover portion 423 prevents mud splashing onto the light-emitting surface of the transparent cover portion 94, as illustrated in FIG. 9, a front end 423F of the lower cover portion 423 is positioned further downward and forward than a front end 942F of a light-emitting surface lower portion 942 of the transparent cover portion 94 of the below-mentioned headlight unit 9. In addition, the front end 423F of the lower cover portion 423 may be positioned further to the front than a below-mentioned imaginary line L1 and further to the rear than a below-mentioned extension imaginary line L5.

In addition, as illustrated in FIG. 6, the front cover portion 421 extends obliquely downward toward the front of the vehicle from at least an upper end 94T of the transparent cover portion 94 of the below-mentioned headlight unit 9 as seen in a cross-section at the center in the vehicle left-right direction. The front edge portion of the front cover portion 421 is arranged further downward and forward than the upper edge portion of a reflector portion 92 of the below-mentioned headlight unit 9.

As illustrated in FIG. 5, the side cover portions 422L, 422R are disposed to the outside in the vehicle width direction of the headlight unit 9 as seen in the vehicle front view. The side cover portions 422L, 422R are formed such that the main configurations thereof exhibit left-right symmetry. The lower cover portion 423 is arranged so as to adjoin the lower edge of the light-emitting surface of the transparent cover portion 94 of the below-mentioned headlight unit 9.

In addition, at least a portion of the front cover portion 421 overlaps a portion of the transparent cover portion 94 of the below-mentioned headlight unit 9 in the vehicle up-down direction, and at least a portion of the lower cover portion 423 overlaps a portion of the transparent cover portion 94 of the below-mentioned headlight unit 9 in the vehicle up-down direction as seen in the vehicle plan view.

### [Side covers 43L, 43R]

The upper edges of the side cover 43L (FIG. 4) and the side cover 43R (not illustrated) are respectively connected to the lower edges of the left and right side cover portions 422L, 422R of the front portion cover 42. The lower edge of the side cover 43L (43R) is connected to the front edge of the footboard 45.

### [Rear cover 44]

As illustrated in FIG. 4, the rear cover 44 is arranged in a vehicle rear portion and is installed below the seat 6 and around a storage box (not illustrated). The rear cover 44 covers the periphery of the rear frame portion 24.

### [Footboard 45]

The low floor footboard 45 which is a foot rest portion is installed between the side covers 43L, 43R and the rear cover 44 for the rider to place his/her feet. In addition, as illustrated in FIG. 4, the footboard 45 extends substantially horizontally rearward of the vehicle from a connecting portion with the lower edge of the side cover 43L (43R), and is connected to the rear cover 44. As a result, a foot rest portion space that is open in the left and right directions of the vehicle is formed between the side cover 43L (43R) and the rear cover 44 and above the footboard 45 as seen in the vehicle side view. The shape of the foot rest portion is not limited to the configuration of the low floor footboard 45.

### <Headlight unit 9>

As illustrated in FIG. 6, the headlight unit 9 includes a bulb 91, the reflector portion 92, a housing portion 93, the transparent cover portion 94, and a lamp chamber 95. The headlight unit 9 is arranged in the front portion cover 42. The headlight unit 9 is arranged in the center in the vehicle width direction and a center line C of the vehicle passes therethrough (see FIG. 5).

### [Bulb 91]

The bulb 91 includes an illumination portion 911 that emits light, and a socket portion 912 to which the illumination portion 911 is attached. The socket portion 912 of the bulb 91 is arranged in the approximate center of the reflector portion 92 as seen in the cross-section at the center in the vehicle left-right direction. The illumination portion 911 of the bulb 91 includes, for example, a double filament. The double filament of the illumination portion 911 includes two filaments. A center point of a line that joins the respective center points in the longitudinal direction of the two filaments of the double filament of the illumination portion 911, is an illumination center 911C (see FIG. 9) of the illumination portion 911.

### [Reflector portion 92]

The reflector portion 92 is configured in roughly a bowl shape and reflects the light from the illumination portion 911 of the bulb 91. The reflector portion 92 includes at least a reflector upper portion 921 and a reflector lower portion 922 as seen in the cross-section at the center in the vehicle left-right direction. As illustrated in FIG. 6, the reflector upper portion 921 of the reflector portion 92 is positioned above the bulb 91 and extends rearward and downward of the vehicle as seen in the cross-section at the center in the vehicle left-right direction, and reflects the light from the bulb 91 in the forward direction of the vehicle. As illustrated in FIG. 6, the reflector lower portion 922 of the reflector portion 92 is positioned below the bulb 91 and extends forward and downward of the vehicle as seen in the cross-section at the center in the vehicle left-right direction, and may be reflected the light from the bulb 91 in the forward direction of the vehicle. However, the reflector upper portion 921 of the reflector portion 92 may be positioned above the socket portion 912 of the bulb 91 and reflect the light from the illumination portion 911 of the bulb 91 in the forward direction of the vehicle. The reflector lower portion 922 of the reflector portion 92 may be positioned below socket portion 912 of the bulb 91 and may be reflected the light from the illumination portion 911 of the bulb 91 in the forward direction of the vehicle.

As seen in the vehicle front view, at least a portion of the reflector upper portion 921 of the reflector portion 92 overlaps a portion of a below-mentioned light-emitting surface upper portion 941 of the light-emitting surface of the transparent cover portion 94 of the headlight unit 9 in the vehicle front-back direction, and at least a portion of the reflector lower portion 922 of the reflector portion 92 overlaps a portion of a below-mentioned light-emitting surface lower portion 942 of the light-emitting surface of the transparent cover portion 94 of the headlight unit 9 in the vehicle front-back direction.

### [Housing portion 93]

The housing portion 93 accommodates the bulb 91 and the reflector portion 92. The lamp chamber 95 is formed by the housing portion 93 and the transparent cover portion 94.

### [Transparent cover portion 94]

As illustrated in FIG. 7, the transparent cover portion 94 is formed in a rounded arrow feather shape as seen in the vehicle front view. The transparent cover portion 94 is not limited to a rounded arrow feather shape and may have an approximately round shape, a hexagonal shape, a rectangular shape, or an inverse trapezoid shape or the like. Many variations are possible. In the case illustrated in FIG. 7, the portion exhibiting the rounded arrow feather shape of the transparent cover portion 94 indicates the portion surrounded by the front cover portion 421, the side cover portions 422L, 422R, and the lower cover portion 423 of the front portion cover 42 as seen in the vehicle front view. As illustrated in FIG. 6, the transparent cover portion 94 covers the bulb 91 and the reflector portion 92 from the front of the vehicle as seen in the cross-section at the center in the vehicle left-right direction. In addition, the transparent cover portion 94 includes a light-emitting surface (the portion surrounded by the front cover portion 421, the side cover portions 422L, 422R, and the lower cover portion 423 of the front portion cover 42) that is exposed to the outside of the front portion cover 42, transmits the light of the illumination portion 911 of the bulb 91, and irradiates the light in the forward direction of the vehicle. As seen in the cross-section at the center in the vehicle left-right direction, at least a portion of the front cover portion 421 of the front portion cover 42 overlaps an upper end 94T of the transparent cover portion 94 in the vehicle up-down direction, and at least a portion of the lower cover portion 423 of the front portion cover 42 overlaps the lower end of the transparent cover portion 94 in the vehicle up-down direction. While not illustrated, at least portions of each of the side cover portions 422L, 422R of the front portion cover 42 overlap the respective left and right ends of the transparent cover portion 94 in the vehicle left-right direction.

As illustrated in FIG. 6, the light-emitting surface includes, as seen in the cross-section at the center in the vehicle left-right direction, the light-emitting surface upper portion 941 that extends rearward and downward of the vehicle from the front edge portion of the front cover portion 421, and the light-emitting surface lower portion 942 that extends forward and downward of the vehicle from the light-emitting surface upper portion 941. In addition, the front end of the light-emitting surface lower portion 942 may be positioned further to the front of the vehicle than the front end of the light-emitting surface upper portion 941 as seen in the cross-section at the center in the vehicle left-right direction.

As illustrated in FIG. 6, the light-emitting surface of the transparent cover portion 94 is shaped to be slightly recessed toward the inside. The portion recessed the most is the portion that corresponds to a boundary 943 of the light-emitting surface upper portion 941 and the light-emitting surface lower portion 942 and separates the light-emitting surface upper portion 941 and the light-emitting surface lower portion 942. As illustrated in FIG. 9, the boundary 943 of the light-emitting surface upper portion 941 and the light-emitting surface lower portion 942 corresponds to a rear end 941B of the light-emitting surface upper portion 941 and a rear end 942B of the light-emitting surface lower portion 942.

As illustrated in FIG. 6, the boundary 943 of the light-emitting surface upper portion 941 and the light-emitting surface lower portion 942 is positioned below an upper end 91U of the bulb 91 and above a lower end 91D of the bulb 91 as seen in the cross-section at the center in the vehicle left-right direction. Preferably, the boundary 943 of the light-emitting surface upper portion 941 and the light-emitting surface lower portion 942 is positioned below an upper end 911U of the illumination portion 911 of the bulb 91 and above a lower end 911D of the illumination portion 911 of the bulb 91 as seen in the cross-section at the center in the vehicle left-right direction.

The boundary 943 of the light-emitting surface upper portion 941 and the light-emitting surface lower portion 942 extends to the left and right sides and upward from the center in the vehicle left-right direction as seen in the vehicle front view as illustrated in FIG. 7, and extends upward and rearward from the front of the vehicle as seen in the vehicle side view as illustrated in FIG. 4.

As illustrated in FIG. 7. the light-emitting surface of the transparent cover portion 94 includes a left edge 94L, a right edge 94R, an upper edge 94U, and a lower edge 94D as seen in the vehicle front view. The left edge 94L extends downward and rightward of the vehicle as seen in the vehicle front view. The right edge 94R extends downward and leftward of the vehicle as seen in the vehicle front view. However, the left edge 94L and the right edge 94R may only extend downward of the vehicle. The upper edge 94U is formed so as to extend upward while advancing toward the outside in the vehicle width direction from a center portion in the vehicle width direction as seen in the vehicle front view. That is, the upper edge 94U of the light-emitting surface of the transparent cover portion 94 is formed in a substantially V-shape so that the center portion in the vehicle width direction is recessed downward as seen in the vehicle front view. However, the upper edge 94U may be formed so as to extend in a direction horizontal to the vehicle width direction as seen in the vehicle front view, or may be formed so that the center portion in the vehicle width direction protrudes upward. The lower edge 94D is formed so as to extend upward while advancing toward the outside in the vehicle width direction from a center portion in the vehicle width direction as seen in the vehicle front view. That is, the lower edge 94D of the transparent cover portion 94 is formed in a substantially V-shape so that the center portion in the vehicle width direction protrudes downward as seen in the vehicle front view. However, the lower edge 94D may be formed so as to extend in a direction horizontal to the vehicle width direction as seen in the vehicle front view, or may be formed so that the center portion in the vehicle width direction is recessed upward. The upper end of the left edge 94L adjoins the left end of the upper edge 94U, and the lower end of the left edge 94L adjoins the left end of the lower edge 94D. The upper end of the right edge 94R adjoins the right end of the upper edge 94U, and the lower end of the right edge 94R adjoins the right end of the lower edge 94D.

The portion surrounded by the left edge 94L, the right edge 94R, the upper edge 94U, and the lower edge 94D is the light-emitting surface of the transparent cover portion 94.

### <Arrangement relationship between the bulb 91 and the transparent cover portion 94>

As indicated above, the light-emitting surface of the transparent cover portion 94 is shaped to be slightly recessed toward the inside. The portion recessed the most is the portion that corresponds to the boundary 943 of the light-emitting surface upper portion 941 and the light-emitting surface lower portion 942. As illustrated in FIG. 6, the portion (or the boundary 943 of the transparent cover portion 94) recessed the most within the recess is in a position near the illumination portion 911 of the bulb 91 as seen in the cross-section at the center in the vehicle left-right direction. As illustrated in FIG. 6, the portion (or the boundary 943 of the transparent cover portion 94) recessed the most within the recess is in a position at the same height as the illumination portion 911 of the bulb 91 as seen in the cross-section at the center in the vehicle left-right direction. In the present teaching, the "position corresponding to the bulb within the transparent cover portion as seen in the cross-section at the center in the vehicle left-right direction" is the position at the same height as illumination portion 911 of the bulb 91 within the transparent cover portion 94 as seen in the cross-section at the center in the vehicle left-right direction.

As illustrated in FIG. 9, the position corresponding to the bulb 91 within the transparent cover portion 94 (or the portion recessed the most within the recess) is positioned further to the rear of the vehicle than the imaginary line L1 that connects the front end of the light-emitting surface upper portion 941 and the front end of the light-emitting surface lower portion 942 as seen in the cross-section at the center in the vehicle left-right direction.

Although not illustrated, the center portion in the vehicle left-right direction of the light-emitting surface of the transparent cover portion 94 is the position corresponding to the bulb 91 as seen in the front view.

### <Arrangement relationship between the reflector portion 92 and the transparent cover portion 94>

The reflector upper portion 921 of the reflector portion 92 includes an upper effective portion 9211 that is inclined in the same direction as the light-emitting surface upper portion 941 as seen in the cross-section at the center in the vehicle left-right direction, and the reflector lower portion 922 of the reflector portion 92 includes a lower effective portion 9221 that is inclined in the same direction as the light-emitting surface lower portion 942 as seen in the cross-section at the center in the vehicle left-right direction

The reflector portion 92 positioned between a horizontal imaginary line L3 that passes through the upper end of the upper effective portion 9211 and a horizontal imaginary line L4 that passes through the lower end of the lower effective portion 9221 is the effective portion in the present teaching. As illustrated in FIG. 9, the upper end of the light-emitting surface upper portion 941 is positioned, for example, on the same horizontal imaginary line L3 as the upper end of the upper effective portion 9211, and the lower end of the light-emitting surface lower portion 942 is positioned, for example, on the same horizontal imaginary line L4 as the lower end of the lower effective portion 9221 as seen in the cross-section at the center in the vehicle left-right direction.

As seen in the cross-section at the center in the vehicle left-right direction, a line that passes through the illumination center 911C of the illumination portion 911 and is orthogonal to the vehicle front-back direction, is an imaginary line L2. The reflector portion 92 positioned further to the rear of the vehicle than the imaginary line L2 is the effective portion in the present teaching.

In the present embodiment, as illustrated in FIG. 9, the range of the effective portion limited by the imaginary line L2 and the range of the effective portion limited by the horizontal imaginary line L3 and the horizontal imaginary line L4, as seen in the cross-section at the center in the vehicle left-right direction, are the same. However, many variations are possible within the allowable range. When the range of the effective portion limited by the imaginary line L2 and the range of the effective portion limited by the horizontal imaginary line L3 and the horizontal imaginary line L4 are different, the effective portion including the smallest range is set as the effective portion among the effective portion limited by the imaginary line L2 and the effective portion limited by the horizontal imaginary line L3 and the horizontal imaginary line L4. For example, when the range of the effective portion limited by the imaginary line L2 is larger than the range of the effective portion limited by the horizontal imaginary line L3 and the horizontal imaginary line L4, the range of the effective portion limited by the horizontal imaginary line L3 and the horizontal imaginary line L4 is set as the effective portion. Conversely, when the range of the effective portion limited by the imaginary line L2 is smaller than the range of the effective portion limited by the horizontal imaginary line L3 and the horizontal imaginary line L4, the range of the effective portion limited by the imaginary line L2 is set as the effective portion.

The upper effective portion 9211 within the reflector portion 92 mainly reflects the light from the illumination portion 911 of the bulb 91, and the reflected light passes through the light-emitting surface upper portion 941 of the transparent cover portion 94 and the reflected light serves as the low beam light. The lower effective portion 9221 within the reflector portion 92 mainly reflects the light from the illumination portion 911 of the bulb 91, and the reflected light passes through the light-emitting surface lower portion 942 of the transparent cover portion 94 and the reflected light serves as the high beam light.

The low beam light easily satisfies the angle of 0-degrees (namely, the vertical incidence) with respect to the light-emitting surface upper portion 941. The high beam light easily satisfies the angle of 0-degrees (namely, the vertical incidence) with respect to the light-emitting surface lower portion 942.

### <Arrangement relationship between the boundary 943 and the front wheel 5>

As illustrated in FIG. 5, the length in the vehicle width direction of the boundary 943 of the light-emitting surface upper portion 941 and the light-emitting surface lower portion 942 is greater than the width of the front wheel 5 as seen in the vehicle front view.

As illustrated in FIG. 5, a left end 943L and a right end 943R of the boundary 943 of the light-emitting surface upper portion 941 and the light-emitting surface lower portion 942 are positioned to the outside in the vehicle width direction of the front wheel 5 as seen in the vehicle front view. That is, the left end 943L of the boundary 943 is positioned further to the left than the left side of the front wheel 5, and the right end 943R of the boundary 943 is positioned further to the right than the right side of the front wheel 5. More specifically, the left end 943L of the boundary 943 is positioned between a vertical imaginary line that stretches along the left side of the front wheel 5 and the left edge 94L of the transparent cover portion 94, and the right end 943R of the boundary 943 is positioned between a vertical imaginary line that stretches along the right side of the front wheel 5 and the right edge 94R of the transparent cover portion 94.

### <Arrangement relationship between the front cover portion 421 and the transparent cover portion 94>

As illustrated in FIG. 9, the line that is tangent to a location of the front cover portion 421 at which the line intersects a vertical imaginary line that extends straight up from the upper end 94T of the transparent cover portion 94 as seen in the cross-section at the center in the vehicle left-right direction, is an extension imaginary line L5. The light-emitting surface upper portion 941 and the light-emitting surface lower portion 942 of the transparent cover portion 94 are both positioned rearward of the extension imaginary line L5. More specifically, a front end 941F of the light-emitting surface upper portion 941 and a front end 942F of the light-emitting surface lower portion 942 of the transparent cover portion 94 are both positioned rearward of the extension imaginary line L5.

### <Effects of embodiment

As indicated above, the straddled vehicle 1 of the present embodiment includes the head pipe 21, the front portion cover 42 arranged in front of the head pipe 21, and the headlight unit 9 arranged in the front portion cover 42. The front portion cover 42 includes a front cover portion 421 that is arranged above the headlight unit 9. The headlight unit 9 includes the bulb 91 for emitting light, the reflector portion 92 for reflecting the light from the bulb 91, the housing portion 93 that accommodates the bulb 91 and the reflector portion 92, the transparent cover portion 94 that covers the bulb 91 and the reflector portion 92 from the front, and the lamp chamber 95 formed by the housing portion 93 and the transparent cover portion 94. As seen in the cross-section at the center in the vehicle left-right direction, the front cover portion 421 extends obliquely downward toward the front of the vehicle at least from above the upper end of the transparent cover portion 94, and the front edge portion of the front cover portion 421 is arranged further downward and forward than the upper edge portion of the reflector portion 92. The transparent cover portion 94 includes the light-emitting surface that is exposed to the outside and irradiates the light from the bulb 91 in the forward direction of the vehicle, and the light-emitting surface includes, as seen in the cross-section at the center in the vehicle left-right direction, the light-emitting surface upper portion 941 that extends rearward and downward of the vehicle from the front edge portion of the front cover portion 421, and the light-emitting surface lower portion 942 that extends forward and downward of the vehicle from the light-emitting surface upper portion 941. The boundary 943 of the light-emitting surface upper portion 941 and the light-emitting surface lower portion 942 is positioned below the upper end of the bulb 91 and above the lower end of the bulb 91 as seen in the cross-section at the center in the vehicle left-right direction. As seen in the cross-section at the center in the vehicle left-right direction, the reflector portion 92 includes, at least, the reflector upper portion 921 that is positioned above the bulb 91, extends rearward and downward of the vehicle, and reflects the light from the bulb 91 in the forward direction of the vehicle, and the reflector lower portion 922 that is positioned below the bulb 91, extends forward and downward of the vehicle, and reflects the light from the bulb 91 in the forward direction of the vehicle.

In the above embodiment, in the straddled vehicle 1 according to the present teaching, the front edge portion of the front cover portion 421 is arranged further downward and forward than the upper edge portion of the reflector portion 92, the transparent cover portion 94 includes the light-emitting surface that is exposed to the outside and irradiates the light of the bulb 91 in the forward direction of the vehicle, and the light-emitting surface includes the light-emitting surface upper portion that extends rearward and downward of the vehicle from the front edge portion of the front cover portion 421 as seen in the cross-section at the center in the vehicle left-right direction.

According to the above configuration, it is difficult for sunlight to enter the lamp chamber 95 from the transparent cover portion 94 which is not shielded by the front cover portion 421. As a result, changes in temperature inside the lamp chamber 95 (heat space) between sunny days and cloudy days are reduced, whereby the lamp chamber 95 can be made smaller.

In the straddled vehicle 1 according to the present embodiment, the light-emitting surface upper portion 941 extends rearward and downward of the vehicle from the front edge portion of the front cover portion 421 as seen in the cross-section at the center in the vehicle left-right direction.

According to the above configuration, the light-emitting surface upper portion 941 includes an inverse inclined surface and therefore the portion exposed upward is reduced and it is more difficult for rainwater falling from the sky to cling to the light-emitting surface upper portion 941.

The straddled vehicle 1 according to the present embodiment, as seen in the cross-section at the center in the vehicle left-right direction, includes the light-emitting surface lower portion 942 that extends forward and downward of the vehicle from the light-emitting surface upper portion 941, and the reflector lower portion 922 that is positioned below the bulb 91, extends forward and downward of the vehicle, and reflects the light from the bulb 91 in the forward direction of the vehicle.

According to the above configuration, the light-emitting surface lower portion 942 includes a forward inclined surface and the reflector lower portion 922 extends forward and downward of the vehicle, whereby the incident angle of the high beam light with respect to the light-emitting surface lower portion 942 can be easily configured to approach 0-degrees (namely, vertical incidence). As a result, the amount of light refracted downward by the transparent cover portion 94 can be reduced and therefore the amount of high beam light irradiated toward the intended location can be assured.

The straddled vehicle 1 according to the present embodiment includes the light-emitting surface lower portion 942 that extends forward and downward of the vehicle from the light-emitting surface upper portion 941 as seen in the cross-section at the center in the vehicle left-right direction.

According to the above configuration, the light-emitting surface lower portion 942 includes a forward inclined surface whereby clinging of the rainwater splashed upward by the vehicle when traveling can be prevented. In addition, the traveling wind flows along the shape of the light-emitting surface lower portion 942 whereby the rainwater clinging to the light-emitting surface lower portion 942 can be moved easily to the boundary 943 of the light-emitting surface upper portion 941 and the light-emitting surface lower portion 942. The boundary 943 of the light-emitting surface upper portion 941 and the light-emitting surface lower portion 942 is positioned near the bulb 91 and therefore rainwater pooled on the boundary 943 is easily evaporated by heat from the bulb 91. Therefore, rainwater clinging to the light-emitting surface lower portion 942 can be removed easily.

As indicated above, the straddled vehicle 1 of the present embodiment can achieve the advantageous effect of easily removing rainwater clinging to the transparent cover portion 94 while suppressing an increase in the size of the headlight unit 9 at the same time.

In one preferred embodiment of the straddled vehicle 1 according to the present teaching, the reflector upper portion 921 includes the upper effective portion 9211 that is inclined in the same direction as the light-emitting surface upper portion 941 as seen in the cross-section at the center in the vehicle left-right direction, and the reflector lower portion 922 includes the lower effective portion 9221 that is inclined in the same direction as the light-emitting surface lower portion 942 as seen in the cross-section at the center in the vehicle left-right direction.

According to the above configuration, the amount of low beam light and high beam light irradiated toward the intended location can be more effectively assured.

In one preferred embodiment of the straddled vehicle 1 according to the present teaching, the bulb 91 includes the illumination portion 911 and the socket portion 912 to which the illumination portion 911 is attached, and the boundary 943 of the light-emitting surface upper portion 941 and the light-emitting surface lower portion 942 is positioned between the upper end 911U and the lower end 911D of the illumination portion 911 as seen in the cross-section at the center in the vehicle left-right direction.

According to the above configuration, the lamp chamber 95 (heat space) is configured so that changes in the temperature between sunny days and cloudy days are reduced, the heat space volume required for sunny days is reduced, and the heat space that is sufficient even for sunny days can be assured. The boundary 943 is positioned near the center of the bulb 91 and heat from the center of the bulb 91 is easily transmitted to the boundary 943, whereby rainwater pooled on the boundary 943 is easily evaporated by the heat from the center of the bulb 91.

In one preferred embodiment of the straddled vehicle 1 according to the present teaching, the front end of the light-emitting surface lower portion 942 is positioned further to the front of the vehicle than the front end of the light-emitting surface upper portion 941 as seen in the cross-section at the center in the vehicle left-right direction.

According to the above configuration, in the straddled vehicle 1 of the present embodiment as seen in the cross-section at the center in the vehicle left-right direction, the light-emitting surface lower portion 942 is a forward inclined surface that extends forward and downward of the vehicle from the light-emitting surface upper portion 941, and the front end of the light-emitting surface lower portion 942 is positioned further to the front of the vehicle than the front end of the light-emitting surface upper portion 941, whereby rainwater splashed upward by the vehicle when traveling can be blocked and clinging of the rainwater splashed upward by the vehicle when traveling can be prevented more effectively.

In addition, because the light-emitting surface lower portion 942 portion is a forward inclined surface, the traveling wind is easily guided along the surface and rainwater clinging to the light-emitting surface lower portion 942 can be moved easily to the boundary 943 of the light-emitting surface upper portion 941 and the light-emitting surface lower portion 942 by the traveling wind. Rainwater that has pooled on the boundary 943 is easily evaporated by the heat from the center of the bulb 91.

In one preferred embodiment of the straddled vehicle 1 according to the present teaching, the front portion cover 42 includes the lower cover portion 423 that is arranged below the headlight unit 9 and extends downward from the lower edge of the headlight unit 9.

According to the above configuration, rainwater splashed upward by the vehicle when traveling can be blocked and the clinging of the rainwater to the transparent cover portion 94 can be prevented more effectively.

In one preferred embodiment of the straddled vehicle 1 according to the present teaching, the lower cover portion 423 extends forward and downward of the vehicle.

According to the above configuration, in the straddled vehicle 1 of the present embodiment, rainwater splashed upward by the vehicle when traveling can be blocked by the lower cover portion 423 that extends forward and downward of the vehicle, and the clinging of the rainwater to the transparent cover portion 94 can be prevented more effectively. Furthermore, the lower cover portion 423 extends forward and downward of the vehicle whereby the traveling wind is guided easily and is able to flow toward the light-emitting surface lower portion 942. Rainwater clinging to the light-emitting surface lower portion 942 can be moved easily to the boundary 943 of the light-emitting surface upper portion 941 and the light-emitting surface lower portion 942 by the traveling wind. Rainwater that has pooled on the boundary 943 is easily evaporated by the heat from the center of the bulb 91.

In one preferred embodiment of the straddled vehicle 1 according to the present teaching, as seen in the cross-section at the center in the vehicle left-right direction, the position corresponding to the bulb 91 within the transparent cover portion 94 is positioned further to the rear of the vehicle than the imaginary line that connects the front end of the light-emitting surface upper portion 941 and the front end of the light-emitting surface lower portion 942.

According to the above configuration, the lamp chamber 95 (heat space) of the straddled vehicle 1 of the present embodiment is configured so that the change in temperature between when it is sunny and when it is cloudy is reduced whereby the required volume of the heat space is reduced and a sufficient heat space even when it is sunny can be assured. The position corresponding to the bulb 91 within the transparent cover portion 94 is the position near the center of the bulb 91 and the heat from the center of the bulb 91 is easily transmitted to the position corresponding to the bulb 91 within the transparent cover portion 94, whereby rainwater pooled at the position corresponding to the bulb 91 within the transparent cover portion 94 is easily evaporated by the heat from the center of the bulb 91.

In one preferred embodiment of the straddled vehicle 1 according to the present teaching, the boundary 943 of the light-emitting surface upper portion 941 and the light-emitting surface lower portion 942 extends to the left and right sides and upward from the center in the vehicle left-right direction as seen in the vehicle front view, and extends upward and rearward from the front of the vehicle as seen in the vehicle side view.

According to the above configuration, the traveling wind flows along the shape of the boundary 943 in the straddled vehicle 1 of the present embodiment, whereby rainwater is moved easily outward in the left and right sides of the transparent cover portion 94 and rearward and therefore does not easily cling to the transparent cover portion 94. Moreover, rainwater that has pooled on the boundary 943 is easily evaporated by the heat from the center of the bulb 91.

### (Other embodiments)

The vehicle body frame 2 of the present teaching is not limited to the abovementioned mode. For example, the joining method of the vehicle body frame 2 is not limited to welding and the vehicle body frame 2 may be fixed by bolts or the like or may be manufactured integrally by casting. In addition, the vehicle body frame 2 is not limited to pipe members and may be a cast frame, and the cross-section is not limited to a round shape and may be a rectangular shape. Many variations are possible.

The configuration of the front portion cover 42 is not limited to the embodiment and the front portion cover 42 may be formed from a plurality of cover members and the division positions of the cover members are not limited in the embodiment.

The vehicle body cover 4 members such as the handle cover 41, the front portion cover 42, the side covers 43L, 43R, the rear cover 44, and the footboard 45 are external members and can be formed as appropriate from a material such as plastic. While the cover members are integral molding components made by injection molding, the cover members may be configured from a plurality of members. For example, while the front cover portion 421, the side cover portions 422L, 422R, and the lower cover portion 423 of the front portion cover 42 are integrated, the members may be separate bodies. In addition, while the front portion cover 42 includes the lower cover portion 423, the lower cover portion 423 may not be included. In addition, the above members may each comprise a plurality of members. The vehicle body covers overall preferably have left-right symmetry from the point of view of appearance and manufacturing.

Moreover, while the straddled vehicle according to the present teaching is a scooter vehicle of a two-wheel motorized vehicle, the straddled vehicle is not limited to a scooter vehicle and may be applicable to a straddled vehicle other than a scooter vehicle such as an electric vehicle, a sports-type two-wheel motorized vehicle, a moped two-wheel motorized vehicle, or a four-wheel buggy such as an all-terrain vehicle (ATV). The present teaching is not limited to a two-wheel straddled vehicle and may be a three-wheel straddled vehicle.

### List of Reference Numerals

- 1: Straddled vehicle
- 2: Vehicle body frame
- 21: Head pipe
- 22: Down frame portion
- 23: Lower frame portion
- 24: Rear frame portion
- 3: Steering mechanism
- 31: Steering shaft
- 32: Front forks
- 4: Vehicle body cover
- 41: Handle cover
- 42: Front portion cover
- 421: Front cover portion
- 422L, 422R: Side cover portion
- 423: Lower cover portion
- 423F: Front end
- 43L, 43R: Side covers
- 44: Rear cover
- 45: Footboard
- 5: Front wheel
- 6: Seat
- 7: Handle
- 8: Rear wheel
- 9: Headlight unit
- 91: Bulb
- 91D: Lower end
- 91U: Upper end
- 911: Illumination portion
- 911C: Illumination center
- 911D: Lower end
- 911U: Upper end
- 912: Socket portion
- 92: Reflector portion
- 921: Reflector upper portion
- 9211: Upper effective portion
- 922: Reflector lower portion
- 9221: Lower effective portion
- 93: Housing portion
- 94: Transparent cover portion
- 941: Light-emitting surface upper portion
- 941B: Rear end
- 941F: Front end
- 942: Light-emitting surface lower portion
- 942B: Rear end
- 942F: Front end
- 943: Boundary
- 943L: Left end
- 943R: Right end
- 94D: Lower edge
- 94L: Left edge
- 94R: Right edge
- 94T: Upper end
- 94U: Upper edge
- 95: Lamp chamber
- 10: Front fender
- 11: Transmission case
- 1000: Front portion cover
- 1011: Front cover portion
- 2000: Headlight unit
- 2021: Housing portion
- 2022: Transparent cover portion
- 2023: Bulb
- 2024: Reflector portion
- 3000: Front cover portion
- 4000: Transparent cover portion
- C: Center line
- HL: High beam light
- L1: Imaginary line
- L2: Imaginary line
- L3: Horizontal imaginary line
- L4: Horizontal imaginary line
- L5: Extension imaginary line
- PU: Power unit
- W: Rainwater

## Claims

1. A straddled vehicle (1) comprising:
a head pipe (21),
a front portion cover (42) arranged in front of the head pipe (21) with regards to a vehicle front-rear direction, and
a headlight unit (9) arranged in the front portion cover (42) with regards to the vehicle front-rear direction, wherein
the front portion cover (42) includes
a front cover portion (421) arranged above the headlight unit (9) with regards to a vehicle up-down direction;
the headlight unit (9) includes:
a bulb (91) configured to emit light,
a reflector portion (92) configured to reflect the light from the bulb (91);
(92), a housing portion (93) that accommodates the bulb (91) and the reflector portion
a transparent cover portion (94) that covers the bulb (91) and the reflector portion (92) from the front with regards to the vehicle front-rear direction, and
a lamp chamber (95) formed by the housing portion (93) and the transparent cover portion (94); and
the front cover portion (421) extends obliquely downward with regards to the vehicle up-down direction toward the front with regards to the vehicle front-rear direction at least from above an upper end (94T) of the transparent cover portion (94) with regards to the vehicle up-down direction as seen in a cross-section at the center in a vehicle left-right direction,
a front edge portion of the front cover portion (421) is arranged further downward with regards to the vehicle up-down direction and forward with regards to the vehicle front-rear direction than an upper edge portion of the reflector portion (92),
the transparent cover portion (94) includes a light-emitting surface that is exposed to an outside and that is configured to irradiate the light from the bulb (91) in the forward direction with regards to the vehicle front-rear direction, and
as seen in the cross-section at the center in the vehicle left-right direction, the reflector portion (92) includes, at least, a reflector upper portion (921) that is positioned above the bulb (91) with regards to the vehicle up-down direction, extends rearward with regards to the vehicle front-rear direction and downward with regards to the vehicle up-down direction, and is configured to reflect the light from the bulb (91) in the forward direction of the vehicle, and a reflector lower portion (922) that is positioned below the bulb (91) with regards to the vehicle up-down direction, extends forward with regards to the vehicle front-rear direction and downward with regards to the vehicle up-down direction, and is configured to reflect the light from the bulb (91) in the forward direction of the vehicle,
**characterized in that**
the light-emitting surface includes, as seen in the cross-section at the center in the vehicle left-right direction, a light-emitting surface upper portion (941) that extends rearward with regards to the vehicle front-rear direction and downward with regards to the vehicle up-down direction from the front edge portion of the front cover portion (421), and a light-emitting surface lower portion (942) that extends forward with regards to the vehicle front-rear direction and downward with regards to the vehicle up-down direction from the light-emitting surface upper portion (941),
a boundary (943) of the light-emitting surface upper portion (941) and the light-emitting surface lower portion (942) is positioned below an upper end of the bulb (91) and above a lower end of the bulb (91) with regards to the vehicle up-down direction as seen in the cross-section at the center in the vehicle left-right direction.

2. The straddled vehicle (1) according to claim 1, wherein the reflector upper portion (921) includes an upper effective portion (9211) that is inclined in the same direction as the light-emitting surface upper portion (941) as seen in the cross-section at the center in the vehicle left-right direction, and the reflector lower portion (922) includes a lower effective portion (9221) that is inclined in the same direction as the light-emitting surface lower portion (942) as seen in the cross-section at the center in the vehicle left-right direction.

3. The straddled vehicle (1) according to claim 1 or 2, wherein the bulb (91) includes an illumination portion (911) and a socket portion (912) to which the illumination portion (911) is attached, and
the boundary (943) of the light-emitting surface upper portion (941) and the light-emitting surface lower portion (942) is positioned between an upper end and a lower end of the illumination portion (911) with regards to the vehicle up-down direction as seen in the cross-section at the center in the vehicle left-right direction.

4. The straddled vehicle (1) according to at least one of the claims 1 to 3, wherein a front end of the light-emitting surface lower portion (942) is positioned further to the front of the vehicle than a front end of the light-emitting surface upper portion (941) with regards to the vehicle front-rear direction as seen in the cross-section at the center in the vehicle left-right direction.

5. The straddled vehicle (1) according to at least one of the claims 1 to 4, wherein the front portion cover (42) includes a lower cover portion (423) that is arranged below the headlight unit (9) and extends downward from the lower edge of the headlight unit (9) with regards to the vehicle up-down direction.

6. The straddled vehicle (1) according to claim 5, wherein the lower cover portion (423) extends forward with regards to the vehicle front-rear direction and downward with regards to the vehicle up-down direction.

7. The straddled vehicle (1) according to claim 4, wherein as seen in the cross-section at the center in the vehicle left-right direction, the position corresponding to the bulb (91) within the transparent cover portion (94) is positioned further to the rear of the vehicle than an imaginary line (L1) that connects the front end of the light-emitting surface upper portion (941) and the front end of the light-emitting surface lower portion (942) with regards to the vehicle front-rear direction.

8. The straddled vehicle (1) according to at least one of the claims 1 to 6, wherein the boundary (943) of the light-emitting surface upper portion (941) and the light-emitting surface lower portion (942) extends to the left and right sides with regards to the vehicle left-right direction and upward with regards to the vehicle up-down direction from the center in the vehicle left-right direction as seen in the vehicle front view, and extends upward with regards to the vehicle up-down direction and rearward with regards to the vehicle front-rear direction from the front of the vehicle as seen in the vehicle side view.

## Patentansprüche

1. Spreizsitz-Fahrzeug (1), das umfasst:
ein Steuerrohr (21),
eine Vorderabschnitt-Verkleidung (42), die in Bezug auf eine Fahrzeug-Längsrichtung vor dem Steuerrohr (21) angeordnet ist, und
eine Scheinwerfer-Einheit (9), die in Bezug auf die Fahrzeug-Längsrichtung in der Vorderabschnitt-Verkleidung (42) angeordnet ist, wobei
die Vorderabschnitt-Verkleidung (42) enthält:
einen vorderen Verkleidungsabschnitt (421), der in Bezug auf eine Fahrzeug-Höhenrichtung oberhalb der Scheinwerfer-Einheit (9) angeordnet ist;
die Scheinwerfer-Einheit (9) enthält:
eine Lampe (91), die zum Emittieren von Licht ausgeführt ist,
einen Reflektorabschnitt (92), der zum Reflektieren des Lichtes von der Lampe (91) ausgeführt ist;
einen Gehäuseabschnitt (93), der die Lampe (91) und den Reflektorabschnitt (92) aufnimmt,
einen transparenten Verkleidungsabschnitt (94), der die Lampe (91) und den Reflektorabschnitt (92) in Bezug auf die Fahrzeug-Längsrichtung von der Vorderseite her abdeckt, sowie
eine Lampenkammer (95), die von dem Gehäuseabschnitt (93) und dem transparenten Verkleidungsabschnitt (94) gebildet wird; und
der vordere Verkleidungsabschnitt (421) sich, in einem Querschnitt in der Mitte in einer Fahrzeug-Querrichtung gesehen, in Bezug auf die Fahrzeug-Höhenrichtung schräg nach unten, in Bezug auf die Fahrzeug-Längsrichtung auf die Vorderseite zu wenigstens von oberhalb eines oberen Endes (94T) des transparenten Verkleidungsabschnitts (94) in Bezug auf die Fahrzeug-Höhenrichtung erstreckt,
ein Vorderkantenabschnitt des vorderen Verkleidungsabschnitts (421) in Bezug auf die Fahrzeug-Höhenrichtung weiter unten und in Bezug auf die Fahrzeug-Längsrichtung weiter vorne angeordnet ist als ein Oberkantenabschnitt des Reflektorabschnitts (92),
der transparente Verkleidungsabschnitt (94) eine lichtemittierende Fläche einschließt, die nach außen hin freiliegt und so ausgeführt ist, dass sie das Licht von der Lampe (91) in der Vorwärtsrichtung in Bezug auf die Fahrzeug-Längsrichtung abstrahlt, und
der Reflektorabschnitt (92), in dem Querschnitt in der Mitte in der Fahrzeug-Querrichtung gesehen, wenigstens einen oberen Reflektorabschnitt (921), der in Bezug auf die Fahrzeug-Höhenrichtung oberhalb der Lampe (91) positioniert ist, sich in Bezug auf die Fahrzeug-Längsrichtung nach hinten und in Bezug auf die Fahrzeug-Höhenrichtung nach unten erstreckt, und so ausgeführt ist, dass er das Licht von der Lampe (91) in der Vorwärtsrichtung des Fahrzeugs reflektiert, sowie einen unteren Reflektorabschnitt (922) einschließt, der in Bezug auf die Fahrzeug-Höhenrichtung unterhalb der Glühbirne (91) positioniert ist, sich in Bezug auf die Fahrzeug-Längsrichtung nach vorn und in Bezug auf die Fahrzeug-Höhenrichtung nach unten erstreckt und so ausgeführt ist, dass er das Licht von der Lampe (91) in der Vorwärtsrichtung des Fahrzeugs reflektiert,
**dadurch gekennzeichnet, dass**
die lichtemittierende Fläche, in dem Querschnitt in der Mitte in der Fahrzeug-Querrichtung gesehen, einen oberen Abschnitt (941) der lichtemittierenden Fläche, der sich von dem Vorderkantenabschnitt des vorderen Verkleidungsabschnitts (421) in Bezug auf die Fahrzeug-Längsrichtung nach hinten und in Bezug auf die Fahrzeug-Höhenrichtung nach unten erstreckt, sowie einen unteren Abschnitt (942) der lichtemittierenden Fläche enthält, der sich von dem oberen Abschnitt (941) der lichtemittierenden Fläche in Bezug auf die Fahrzeug-Längsrichtung nach vorn und in Bezug auf die Fahrzeug-Höhenrichtung nach unten erstreckt,
eine Grenze (943) des oberen Abschnitts (941) der lichtemittierenden Fläche und des unteren Abschnitts (942) der lichtemittierenden Fläche, in dem Querschnitt in der Mitte in der Fahrzeug-Querrichtung gesehen, in Bezug auf die Fahrzeug-Höhenrichtung unterhalb eines oberen Endes der Lampe (91) und oberhalb eines unteren Endes der Lampe (91) angeordnet ist.

2. Spreizsitz-Fahrzeug (1) nach Anspruch 1, wobei der obere Reflektorabschnitt (921) einen oberen wirksamen Abschnitt (9211) enthält, der, in dem Querschnitt in der Mitte in der Fahrzeug-Querrichtung gesehen, in der gleichen Richtung geneigt ist wie der obere Abschnitt (941) der lichtemittierenden Fläche und der untere Reflektorabschnitt (922), in dem Querschnitt in der Mitte in der Fahrzeug-Querrichtung gesehen, einen unteren wirksamen Abschnitt (9221) enthält, der in der gleichen Richtung geneigt ist wie der untere Abschnitt (942) der lichtemittierenden Fläche.

3. Spreizsitz-Fahrzeug (1) nach Anspruch 1 oder 2, wobei die Lampe (91) einen Leuchtabschnitt (911) und einen Fassungsabschnitt (912) einschließt, an dem der Leuchtabschnitt (911) angebracht ist, und
die Grenze (943) des oberen Abschnitts (941) der lichtemittierenden Fläche und des unteren Abschnitts (942) der lichtemittierenden Fläche, in dem Querschnitt in der Mitte in der Fahrzeug-Querrichtung gesehen, in Bezug auf die Fahrzeug-Höhenrichtung zwischen einem oberen Ende und einem unteren Ende des Leuchtabschnitts (911) angeordnet ist.

4. Spreizsitz-Fahrzeug (1) nach wenigstens einem der Ansprüche 1 bis 3, wobei ein vorderes Ende des unteren Abschnitts (942) der lichtemittierenden Fläche, in dem Querschnitt in der Mitte in der Fahrzeug-Querrichtung gesehen, in Bezug auf die Fahrzeug-Längsrichtung weiter vorn an dem Fahrzeug positioniert ist als ein vorderes Ende des oberen Abschnitts (941) der lichtemittierenden Fläche.

5. Spreizsitz-Fahrzeug (1) nach wenigstens einem der Ansprüche 1 bis 4, wobei die Vorderabschnitt-Verkleidung (42) einen unteren Verkleidungsabschnitt (423) enthält, der in Bezug auf die Fahrzeug-Höhenrichtung unterhalb der Scheinwerfer-Einheit (9) angeordnet ist und sich von der Unterkante der Scheinwerfer-Einheit (9) nach unten erstreckt.

6. Spreizsitz-Fahrzeug (1) nach Anspruch 5, wobei sich der untere Verkleidungsabschnitt (423) in Bezug auf die Fahrzeug-Längsrichtung nach vorn und in Bezug auf die Fahrzeug-Höhenrichtung nach unten erstreckt.

7. Spreizsitz-Fahrzeug (1) nach Anspruch 4, wobei, in dem Querschnitt in der Mitte in der Fahrzeug-Querrichtung gesehen, die Position, die der Lampe (91) innerhalb des transparenten Verkleidungsabschnitts (94) entspricht, in Bezug auf die Fahrzeug-Längsrichtung weiter hinten an dem Fahrzeug liegt als eine imaginäre Linie (L1), die das vordere Ende des oberen Abschnitts (941) der lichtemittierenden Fläche und das vordere Ende des unteren Abschnitts (942) der lichtemittierenden Fläche verbindet.

8. Spreizsitz-Fahrzeug (1) nach wenigstens einem der Ansprüche 1 bis 6, wobei die Grenze (943) des oberen Abschnitts (941) der lichtemittierenden Fläche und des unteren Abschnitts (942) der lichtemittierenden Fläche, in der Vorderansicht des Fahrzeugs gesehen, von der Mitte aus in der Fahrzeug-Querrichtung in Bezug auf die Fahrzeug-Querrichtung nach links und nach rechts und in Bezug auf die Fahrzeug-Höhenrichtung nach oben erstreckt, und sich, in der Seitenansicht des Fahrzeugs gesehen, von der Vorderseite des Fahrzeugs aus in Bezug auf die Fahrzeug-Höhenrichtung nach oben und in Bezug auf die Fahrzeug-Längsrichtung nach hinten erstreckt.

## Revendications

1. Véhicule à enfourcher (1) comprenant :
un tube de tête de fourche (21),
un capot de partie avant (42) disposé devant le tube de tête de fourche (21) selon une direction avant-arrière de véhicule, et
une unité de phare (9) disposée dans le capot de partie avant (42) selon la direction avant-arrière de véhicule, dans lequel
le capot de partie avant (42) inclut
une partie de capot avant (421) disposée au-dessus de l'unité de phare (9) selon une direction haut-bas de véhicule ;
l'unité de phare (9) inclut :
une ampoule (91) configurée pour émettre une lumière,
une partie de réflecteur (92) configurée pour réfléchir la lumière issue de l'ampoule (91) ;
une partie de boîtier (93) qui accueille l'ampoule (91) et la partie de réflecteur (92),
une partie de capot transparente (94) qui couvre l'ampoule (91) et la partie de réflecteur (92) à l'avant selon la direction avant-arrière de véhicule, et
un compartiment de lampe (95) constitué par la partie de boîtier (93) et la partie de capot transparente (94) ; et
la partie de capot avant (421) s'étend obliquement vers le bas selon la direction haut-bas de véhicule vers l'avant selon la direction avant-arrière de véhicule au moins depuis au-dessus d'une extrémité supérieure (94T) de la partie de capot transparente (94) selon la direction haut-bas de véhicule tel qu'observé dans une coupe transversale au centre dans une direction gauche-droite de véhicule,
une partie d'arête avant de la partie de capot avant (421) est disposée davantage vers le bas selon la direction haut-bas de véhicule et vers l'avant selon la direction avant-arrière de véhicule qu'une partie d'arête supérieure de la partie de réflecteur (92),
la partie de capot transparente (94) inclut une surface électroluminescente qui est exposée vers un extérieur et qui est configurée pour irradier la lumière issue de l'ampoule (91) dans la direction avant selon la direction avant-arrière de véhicule, et
tel qu'observé dans la coupe transversale au centre dans la direction gauche-droite du véhicule, la partie de réflecteur (92) inclut, au moins, une partie de réflecteur (921) qui est positionnée au-dessus de l'ampoule (91) selon la direction haut-bas de véhicule, s'étend vers l'arrière selon la direction avant-arrière de véhicule et vers le bas selon la direction haut-bas de véhicule, et est configurée pour refléter la lumière issue de l'ampoule (91) dans la direction avant du véhicule, et une partie inférieure de réflecteur (922) qui est positionnée au-dessous de l'ampoule (91) selon la direction haut-bas de véhicule, s'étend vers l'avant selon la direction avant-arrière de véhicule et vers le bas selon la direction haut-bas de véhicule, et est configurée pour refléter la lumière issue de l'ampoule (91) dans la direction avant du véhicule,
**caractérisé en ce que**
la surface électroluminescente inclut, tel qu'observé dans la section transversale au centre dans la direction gauche-droite de véhicule, une partie supérieure de surface électroluminescente (941) qui s'étend vers l'arrière selon la direction avant-arrière de véhicule et vers le bas selon la direction haut-bas de véhicule depuis la partie d'arête avant de la partie de capot avant (421), et une partie inférieure de surface électroluminescente (942) qui s'étend vers l'avant selon la direction avant-arrière de véhicule et vers le bas selon la direction haut-bas de véhicule depuis la partie supérieure de surface électroluminescente (941),
une limite (943) de la partie supérieure de surface électroluminescente (941) et la partie inférieure de surface électroluminescente (942) est positionnée au-dessous d'une extrémité supérieure de l'ampoule (91) et au-dessus d'une extrémité inférieure de l'ampoule (91) selon la direction haut-bas de véhicule tel qu'observé dans la section transversale au centre dans la direction gauche-droite de véhicule.

2. Le véhicule à enfourcher (1) selon la revendication 1, dans lequel la partie supérieure de réflecteur (921) inclut une partie effective supérieure (9211) qui est inclinée dans la même direction que la partie supérieure de surface électroluminescente (941) tel qu'observé dans la section transversale au centre dans la direction gauche-droite de véhicule, et la partie inférieure de réflecteur (922) inclut une partie effective inférieure (9221) qui est inclinée dans la même direction que la partie inférieure de surface électroluminescente (942) tel qu'observé dans la section transversale au centre dans la direction gauche-droite de véhicule.

3. Le véhicule à enfourcher (1) selon la revendication 1 ou 2, dans lequel l'ampoule (91) inclut une partie d'éclairage (911) et une partie de douille (912) à laquelle la partie d'éclairage (911) est rattachée, et
la limite (943) de la partie supérieure de surface électroluminescence (941) et la partie inférieure de surface électroluminescente (942) est positionnée entre une extrémité supérieure et une extrémité inférieure de la partie d'éclairage (911) selon la direction haut-bas de véhicule tel qu'observé dans la section transversale au centre dans la direction gauche-droite de véhicule.

4. Le véhicule à enfourcher (1) selon au moins une des revendications 1 à 3, dans lequel une extrémité avant de la partie inférieure de surface électroluminescente (942) est positionnée plus vers l'avant du véhicule qu'une extrémité avant de la partie supérieure de surface électroluminescente (941) selon la direction avant-arrière de véhicule tel qu'observé dans la section transversale au centre dans la direction gauche-droite de véhicule.

5. Le véhicule à enfourcher (1) selon au moins une des revendications 1 à 4, dans lequel le capot de partie avant (42) inclut une partie de capot inférieure (423) qui est disposée au-dessous de l'unité de phare (9) et s'étend vers le bas depuis l'arête inférieure de l'unité de phare (9) selon la direction haut-bas de véhicule.

6. Le véhicule à enfourcher (1) selon la revendication 5, dans lequel la partie de capot inférieure (423) s'étend vers l'avant selon la direction avant-arrière de véhicule et vers le bas selon la direction haut-bas de véhicule.

7. Le véhicule à enfourcher (1) selon la revendication 4, dans lequel tel qu'observé dans la section transversale au centre dans la direction gauche-droite de véhicule, la position correspondant à l'ampoule (91) au sein de la partie de capot transparente (94) est positionnée plus vers l'arrière du véhicule qu'une ligne imaginaire (L1) qui connecte l'extrémité avant de la partie supérieure de surface électroluminescente (941) et l'extrémité avant de la partie inférieure de surface électroluminescente (942) selon la direction avant-arrière de véhicule.

8. Le véhicule à enfourcher (1) selon au moins une des revendications 1 à 6, dans lequel la limite (943) de la partie supérieure de surface électroluminescente (941) et la partie inférieure de surface électroluminescente (942) s'étend vers les côtés gauche et droit selon la direction gauche-droite de véhicule et vers le haut selon la direction haut-bas de véhicule depuis le centre dans la direction gauche-droite de véhicule tel qu'observé dans la vue avant de véhicule, et s'étend vers le haut selon la direction haut-bas de véhicule et vers l'arrière selon la direction avant-arrière de véhicule depuis l'avant du véhicule tel qu'observé dans la vue latérale de véhicule.
